# EUROPÄISCHE PATENTSCHRIFT

(11) **EP 3 168 337 B1**
(45) Veröffentlichungstag und Bekanntmachung des Hinweises auf die Patenterteilung: **28.03.2018**
(21) Anmeldenummer: 15193805.7
(22) Anmeldetag: 10.11.2015
(51) Int. Cl.: D01G 25/00

(54) **VORRICHTUNG ZUM GEFÜHRTEN TRANSPORT EINER FLORBAHN**
DEVICE FOR GUIDED TRANSPORT OF A FIBRE WEB
DISPOSITIF DESTINE AU TRANSPORT GUIDE D'UNE BANDE DE VOILE

(43) Veröffentlichungstag der Anmeldung: 17.05.2017
(73) Patentinhaber: Oskar Dilo Maschinenfabrik KG, 69412 Eberbach (DE)
(72) Erfinder: Dilo, Johann Philipp, 69412 Eberbach (DE)
(74) Vertreter: Wächter, Jochen

(56) Entgegenhaltungen:
- EP-A1- 1 367 165
- EP-A1- 1 947 223
- JP-Y1- S4 711 584
- TW-B- 509 734

## Beschreibung

Die Erfindung betrifft eine Vorrichtung zum geführten Transport einer Florbahn.

Der Transport von Florbahnen zur Vliesherstellung erfolgt ausgehend von der Krempel, in der die Florbahn aus Materialfasern erzeugt wird, bis zum Vliesleger, in dem die Florbahn zu einem dickeren Vlies mit mehreren Florschichten gelegt wird. Auf der gesamten Transportstrecke der Florbahn von der Krempel bis zur Ablage der Florbahn im Vliesleger tritt das Problem auf, dass die Transportbänder für die Florbahn aufgrund der hohen Geschwindigkeiten Schleppluft mit sich führen, die beim Umlenken der Florbahn um Umlenkwalzen oder beim Zusammenführen zweier Transportbänder zu einer Blasenbildung führt. Diese Luft entweicht lateral und führt zu einem Flattern der Bänder sowie zu Florverblasungen, Florrissen, Dehnungen oder Verbreiterungen des Flors, also allgemein zu einer Inhomogenität des Flors. Bei der Umlenkung der Florbahn um Umlenkwalzen führen die auftretenden Zentrifugalkräfte zusätzlich zu einer Florlängung, was ebenfalls die Gefahr einer Sack- bzw. Faltenbildung mit sich bringt.

Aus EP 1 367 166 B1 ist es bekannt, zum Ableiten der mitgeführten Schleppluft in einem Abschnitt der Transportstrecke, in dem die Florbahn eine Wende erfährt, ein als Umlenkrolle ausgebildetes Führungselement anzuordnen. Das bekannte Führungselement hat eine Oberfläche, die dem Verlauf der Transportstrecke folgend konvex gekrümmt ist. In dem Führungselement ist eine Vielzahl von radialen Durchgangsöffnungen gebildet, durch die die Schleppluft radial abgeleitet wird. EP 1 367 165 A1 ist weitgehend identisch zu EP 1 367 166 B1 und offenbart zusätzlich noch, dass in der Oberfläche des Führungselements Vertiefungen und Erhebungen, die in Axialrichtung oder in Förderrichtung der Florbahn verlaufen, gebildet sind. Sämtliche in EP 1 367 165 A1 und EP 1 367 166 B1 beschriebenen Ausgestaltungen sind allerdings mechanisch aufwändig und wartungsintensiv.

EP 1 947 223 A1 offenbart ein Führungselement zum Führen einer Florbahn um eine Umlenkwalze. Das Führungselement besteht aus einer Mehrzahl von nebeneinander, voneinander beabstandet angeordneten gekrümmten Zungen mit Freiräumen zwischen den Zungen.

Aus JP S47 11584 Y1 sind zwei lineare Transportbänder zum Transport einer Materialbahn mit einer zwischen den Transportbändern angeordneten Bearbeitungswalze mit radialen Bearbeitungselementen bekannt. Um die Bearbeitungswalze herum ist eine Abdeckung angeordnet.

Schließlich ist aus TW 509 734 B ein walzenförmiges Umlenkelement zum Umlenken einer Materialbahn bekannt. Das Umlenkelement besteht aus einer Mehrzahl von nebeneinander, voneinander beabstandet angeordneten Scheiben. Der Zwischenraum zwischen den Scheiben wird zum Ableiten eines Luftstroms genutzt.

Es ist die Aufgabe der vorliegenden Erfindung, eine Vorrichtung zum geführten Transport einer Florbahn zu schaffen, die mit geringem Aufwand auch bei hohen Geschwindigkeiten einen sicheren Transport der Florbahn gewährleistet und bei der eine Beeinträchtigung der Florbahn durch Schleppluft verhindert ist.

Diese Aufgabe wird durch die Merkmale des Anspruchs 1 gelöst.

Erfindungsgemäß wird eine Vorrichtung zum geführten Transport einer Florbahn vorgeschlagen, die ein Florbahntransportmittel mit einer umlaufenden Außenfläche zum Fördern der Florbahn in einer Förderrichtung umfasst. Die Vorrichtung hat weiterhin ein Führungselement mit einer gekrümmten Form, das gegenüber zumindest einem Abschnitt der Außenfläche des Florbahntransportmittels angeordnet ist und quer zur Förderrichtung, der Außenfläche des Florbahntransportmittels zugewandt, ein Oberflächenprofil hat, das eine Mehrzahl von sich abwechselnden Erhebungen und Vertiefungen aufweist. Die Mehrzahl von Erhebungen und Vertiefungen erstreckt sich in Förderrichtung der Florbahn, sodass die Erhebungen Führungsflächen zum Führen der Florbahn und die Vertiefungen Lüftungsrillen zum Ableiten der durch die Florbahn mitgeführten Schleppluft bilden. Das Führungselement ist in Förderrichtung konkav gekrümmt und die Erhebungen weisen radial nach innen. Das Florbahntransportmittel ist ein um mehrere Umlenkwalzen laufendes Transportband, wobei der Abschnitt der Außenfläche des Transportbandes, der zum jeweiligen Zeitpunkt dem Führungselement gegenüberliegt, sich immer im Umlaufbereich um eine Florbahnumlenkwalze befindet. Vorteilhaft dabei ist, dass die Erhebungen eine wirksame Führung der Florbahn in Förderrichtung ermöglichen, während gleichzeitig die Schleppluft in den Lüftungsrillen ebenfalls in Förderrichtung mit der Bewegung der Florbahn mitgeführt wird, ohne auf die Florbahn Einfluss zu nehmen. Zudem sind die Führungsflächen der Erhebungen in Richtung der Fliehkräfte der umlaufenden Florbahn angeordnet, so dass eine sichere Führung der Florbahn in Umlenkrichtung gewährleistet ist. Ferner gelingt es auf diese Weise, eine Florbahn unter Weiterleitung und schließlich Ableitung von Schleppluft und unter Vermeidung negativer Zentrifugalkrafteinflüsse in eine andere Richtung umzulenken. Vorzugsweise verlaufen die Erhebungen und Vertiefungen in Förderrichtung parallel zueinander. Dadurch wird die Schleppluft in den jeweiligen Lüftungsrillen in derselben Richtung mitgeführt, sodass Luftströmungen quer zur Förderrichtung verhindert sind.

Eine weitere Ausgestaltung besteht darin, dass die Erhebungen in Richtung quer zur Förderrichtung in gleichen Abständen zueinander angeordnet sind, sodass vorteilhafterweise eine gleichmäßige Struktur der Führungsflächen für die Florbahn quer zur Förderrichtung gebildet wird.

Mit weiterem Vorteil erstrecken sich die Erhebungen und Vertiefungen jeweils über eine konstante Länge. Die Florbahn wird somit an allen Punkten ihres gekrümmten Weges gleichmäßig unterstützt.

Es ist weiterhin bevorzugt, dass sich die Erhebungen und Vertiefungen über die gesamte Länge des Führungselements in Förderrichtung erstrecken. Damit enden die Lüftungsrillen genau dort, wo auch das Führungselement endet.

Eine besonders bevorzugte Ausführungsform des zuvor beschriebenen parallelen Verlaufs der Erhebungen und Vertiefungen in Förderrichtung liegt darin, dass die Lüftungsrillen bei Umlenkung der Florbahn entlang eines Walzenabschnitts zumindest abschnittsweise tangential verlaufen.

In dem Fall, dass die durch die Erhebungen gebildeten Führungsflächen und der gegenüberliegende Abschnitt der Außenfläche des Florbahntransportmittels gleichbleibend voneinander beabstandet sind, wird ein konstanter Florführungskanal zwischen dem Führungselement und dem Florbahntransportmittel definiert, der einen zuverlässigen Transport der Florbahn begünstigt.

Zum Führen von Florbahnen mit unterschiedlichen Flordicken kann eine Einrichtung vorgesehen sein, mit der der Abstand zwischen den Erhebungen und der Außenfläche des Florbahntransportmittels einstellbar ist.

Eine speziell für den Übergang zwischen einem Oberwagen und einem Legewagen eines als Flachtäfler ausgestalteten Vlieslegers geeignete Vorrichtung erhält man, wenn das Transportband in einem spitzen Winkel um die Florbahnumlenkwalze im Oberwagen geführt ist. Anschließend verläuft das Transportband ausgehend von der Florbahnumlenkwalze im Wesentlichen horizontal, und ein zweites Transportband verläuft unterhalb in geringem Abstand parallel zum ersten Transportband. Die Führungseigenschaft der Vorrichtung wird hierbei dadurch optimiert, dass die Krümmung der Erhebungen der Form eines Umfangsabschnitts der Florbahnumlenkwalze entspricht.

Es hat sich gezeigt, dass eine besonders stabile Führung der Florbahn möglich ist, wenn die Breite der Führungsflächen zwischen 0,5 mm und 10 mm, vorzugsweise zwischen 3 mm und 8 mm beträgt.

Es hat sich weiterhin gezeigt, dass eine besonders wirksame Ableitung der Schleppluft möglich ist, wenn die Breite der Vertiefungen zwischen 1 mm und 20 mm, vorzugsweise zwischen 4 mm und 12 mm beträgt.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Ansicht im Schnitt eines Vlieslegers mit einer erfindungsgemäßen Vorrichtung zum geführten Transport einer Florbahn;
- Fig. 2: ist eine vergrößerte Ansicht eines Ausschnitts x aus Fig. 1;
- Fig. 3a-3b: sind eine perspektivische Ansicht und eine Ansicht im Schnitt einer ersten Ausführungsform eines Führungselements der erfindungsgemäßen Vorrichtung;
- Fig. 4a-4b: sind eine perspektivische Ansicht und eine Ansicht im Schnitt einer zweiten Ausführungsform eines Führungselements der erfindungsgemäßen Vorrichtung;
- Fig. 5a-5b: sind eine perspektivische Ansicht und eine Ansicht im Schnitt einer dritten Ausführungsform eines Führungselements der erfindungsgemäßen Vorrichtung; und
- Fig. 6a-6b: sind eine perspektivische Ansicht und eine Ansicht im Schnitt einer vierten Ausführungsform eines Führungselements der erfindungsgemäßen Vorrichtung.

Ein erster Einsatzbereich der erfindungsgemäßen Vorrichtung zum geführten Transport einer Florbahn liegt in der Führung einer Florbahn um eine Umlenkwalze, so dass die Florbahn anschließend mit der Oberseite nach unten zu liegen kommt. Diese Variante findet vor allem in als Flachtäflern ausgebildeten Vlieslegern Anwendung.

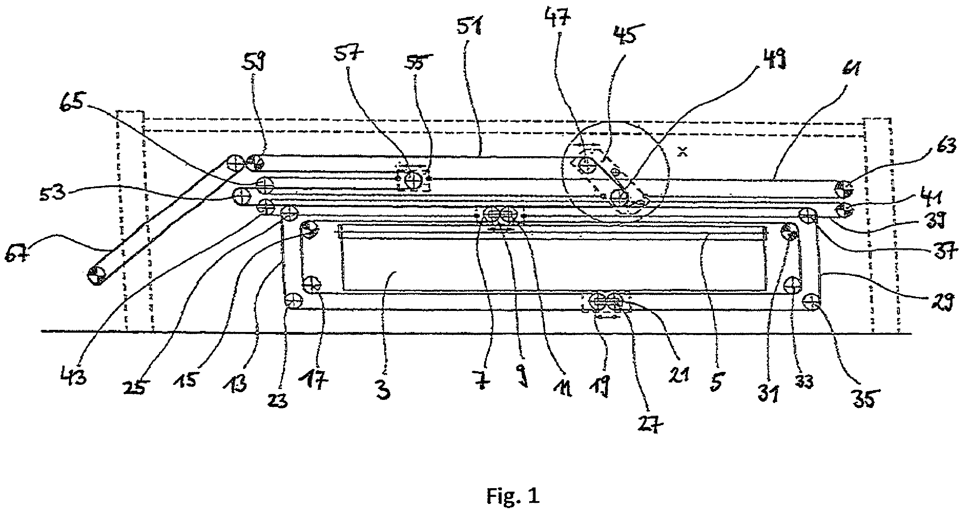

Fig. 1 zeigt einen derartigen Vliesleger mit einem Abliefertransportband 3, das dazu bestimmt ist, ein gelegtes Vlies in einer senkrecht zur Zeichnungsebene verlaufenden Transportrichtung abzutransportieren. Von Führungseinrichtungen des Abliefertransportbandes 3 ist eine obere Umlenkwalze 5 dargestellt. Über dem Abliefertransportband 3 ist ein Legewagen 7 auf Schienen (nicht dargestellt) quer zur Transportrichtung des Abliefertransportbandes 3 hin und her verfahrbar. In dem Legewagen 7 sind zwei Umlenkwalzen 9 und 11 frei drehbar gelagert. Die erste Umlenkwalze 9 ist von einem ersten Abdeckband 13 teilumschlungen, das einen Abschnitt aufweist, der in dichtem Abstand über dem Abliefertransportband 3 zu einer angetriebenen Umlenkwalze 15 und von dort über eine weitere ortsfeste Umlenkwalze 17 zu einer Umlenkwalze 19 verläuft, die in einem ersten Spannwagen 21 drehbar gelagert ist, der unterhalb des Abliefertransportbandes 3 quer zu diesem auf Schienen (nicht dargestellt) verfahrbar ist. Von der im Spannwagen 21 gelagerten Umlenkwalze 19 verläuft das genannte Abdeckband 13 über zwei weitere ortsfeste Umlenkwalzen 23 bzw. 25 zurück zum Legewagen 7. Die angetriebene Umlenkwalze 15 ist mit einem Motor (nicht dargestellt) gekoppelt und ist dazu bestimmt, das erste Abdeckband 13 in unterschiedlichen Richtungen anzutreiben.

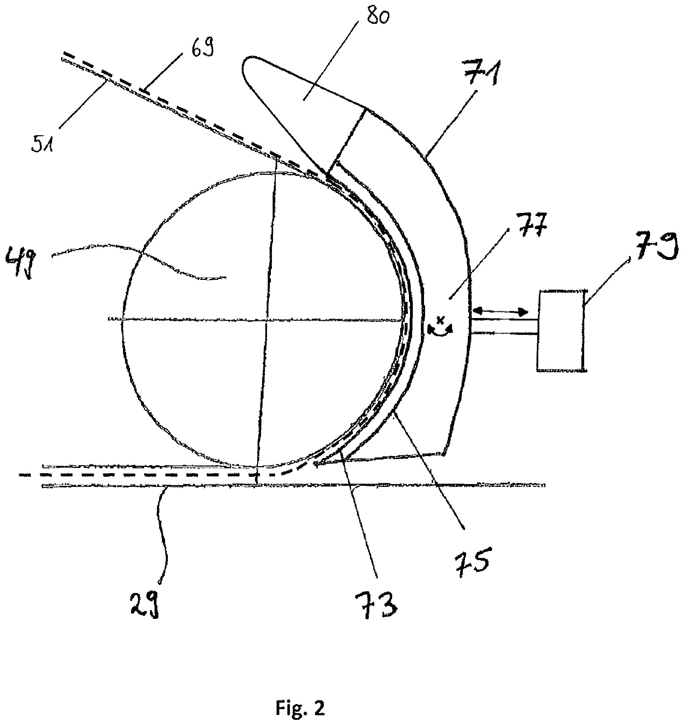

Da das obere Trum des zweiten Abdeckbandes 29 auch dem Transport einer Florbahn 69 (siehe Fig. 2) in den zwischen den Umlenkwalzen 9 und 11 gebildeten Legespalt am Legewagen 7 dient, kann man das zweite Abdeckband 29 auch als ein Legeband bezeichnen.

In ähnlicher Weise ist die andere Umlenkwalze 11, die im Legewagen 21 drehbar gelagert ist, von einem zweiten Abdeckband 29 teilumschlungen, das über eine angetriebene Umlenkwalze 31 und eine ortsfeste Umlenkwalze 33 zu einer im Spannwagen 21 gelagerten zweiten Umlenkwalze 27 geführt ist, die von dem Abdeckband 29 teilumschlungen wird, von wo aus das Abdeckband 29 über weitere ortsfeste Umlenkwalzen 35 bzw. 37 zum Legewagen 7 zurückläuft. Das zweite Abdeckband 29 weist somit einen Abschnitt auf, der in dichtem Abstand über dem Abliefertransportband 3 verläuft. Die angetriebene Umlenkwalze 31 ist ebenfalls mit einem Motor (nicht dargestellt) gekoppelt und ist dazu bestimmt, das zweite Abdeckband 29 in unterschiedlichen Richtungen anzutreiben.

Am Legewagen 7 ist eine Kette oder ein Zahnriemen 39 angebracht, die bzw. der über ein mit einem Motor (nicht dargestellt) verbundenen Antriebszahnrad 41 und ein Umlenkrad 43 läuft. Mit Hilfe dieser Antriebseinrichtungen lässt sich der Legewagen 7 oberhalb des Abliefertransportbandes 3 quer zu dessen Transportrichtung hin und her verfahren.

In einer gegenüber dem Höhenniveau des Legewagens 7 erhöhten Lage ist in dem Maschinengestell ein gestrichelt dargestellter Oberwagen 45 quer zur Transportrichtung des Abliefertransportbandes 3 auf Schienen (nicht dargestellt) verfahrbar gelagert. Der Oberwagen 45 hat eine obere Umlenkwalze 47 und eine untere Florbahnumlenkwalze 49, die in Bewegungsrichtung des Oberwagens 45 gegeneinander versetzt sind. Über diese beiden Walzen 47 und 49 läuft ein als Transportband ausgestaltetes Florbahntransportmittel 51 für die Florbahn 69, das nachfolgend auch erstes Transportband genannt wird. In dem Bereich, der von den beiden Umlenkwalzen 47 und 49 im Oberwagen 45 begrenzt wird, verläuft das erste Transportband 51 schräg abwärts geneigt. Von der unteren Florbahnumlenkwalze 49 im Oberwagen 45 ausgehend verläuft das erste Transportband 51 parallel zu dem oberen Trum der beiden Abdeckbänder 13 und 29. Da das erste Transportband 51 zusammen mit einem Abschnitt des oberen Trums des zweiten Abdeckbandes 29 die Florbahn 69 führt, kann es ebenfalls als ein Legeband bezeichnet werden. Das erste Transportband 51 ist über eine im Maschinengestell ortsfest gelagerte Umlenkwalze 53 und von dort über eine in einem zweiten Spannwagen 55 gelagerte Umlenkwalze 57 geführt, um dann über eine ortsfest gelagerte, motorisch angetriebene Umlenkwalze 59 zu laufen, bevor es den Oberwagen 45 wieder erreicht. Der Oberwagen 45 und der zweite Spannwagen 55 sind über eine Kette oder einen Zahnriemen 61 miteinander verbunden, die bzw. der über ein mit einem Motor (nicht dargestellt) verbundenes Antriebszahnrad 63 und ein Umlenkrad 65, die im Maschinengestell gelagert sind, läuft. Ferner erkennt man in Fig. 1 ein schräg nach oben verlaufendes Zuführband 67, das die zu legende Florbahn 69 dem ersten Transportband 51 zuführt.

In dem Bereich zwischen der unteren Florbahnumlenkwalze 49 des Oberwagens 45 und der zweiten Umlenkwalze 11 des Legewagens 7 sind das erste Transportband 51 und das zweite Abdeckband 29 im Wesentlichen parallel zueinander in engem Abstand geführt, so dass eine vom ersten Transportband 51 herangeführte Florbahn 69 in dem genannten Bereich zwischen dem Oberwagen 45 und dem Legewagen 7 vom ersten Transportband 51 und dem zweiten Abdeckband 29 sandwichartig eingeschlossen ist. Dabei ist die Florbahn 69 von dem genannten Abdeckband 29 abgestützt, weshalb dieses auch als zweites Transportband bezeichnet wird.

Man erkennt in der Zeichnung, dass im Betrieb, wenn der Legewagen 7 eine über dem Abliefertransportband 3 hin- und hergehende Bewegung ausführt, der erste Spannwagen 21 eine gegenläufige Bewegung ausführt, weil die Schleifenlängen der Abdeckbänder 13 und 29 konstant sind. Weiterhin führen der Oberwagen 45 und sein zugehöriger zweiter Spannwagen 55 im Betrieb zueinander gegenläufige Bewegungen aus, weil sie durch die Kette oder den Zahnriemen 61 kraftschlüssig miteinander verbunden sind. Der zweite Spannwagen 55 ist notwendig, um die Schleifenlänge des ersten Transportbandes 51 konstant zu halten.

Die vorliegende Erfindung wird nun bei derartigen Vlieslegern genutzt, um die Florbahn 69 vom ersten Transportband 51 um die untere Florbahnumlenkwalze 49 im Oberwagen 45 umgedreht auf das zweite Transportband 29 zu führen.

Eine Detailansicht gemäß Ausschnitt x der in Fig. 1 dargestellten Ausführungsform der erfindungsgemäßen Vorrichtung zum geführten Transport einer Florbahn ist in Fig. 2 gezeigt.

Wie oben bereits erwähnt, ist das Florbahntransportmittel 51 hier ein erstes Transportband, das an seiner umlaufenden Außenfläche eine Kontaktfläche mit der Florbahn 69, die gestrichelt skizziert ist, bildet. Die Außenfläche des Transportbandes 51 besitzt dabei generell einen ausreichend hohen Reibungskoeffizienten, z.B. aufgrund einer rauen Oberfläche, sodass sie bei Bewegung die Florbahn 69 mitnimmt.

Neben dem ersten Transportband 51, das zum Vorwärtsbewegen der Florbahn 69 dient, weist die Vorrichtung zum geführten Transport der Florbahn auch ein Führungselement 71 mit einer Mehrzahl von beabstandet nebeneinander angeordneten, gekrümmten Erhebungen 73 und dazwischen liegenden Vertiefungen 75 auf.

In Fig. 2 ist aufgrund der Querschnittsansicht lediglich eine Erhebung 73 dargestellt, während die übrigen Erhebungen in Zeichenebene vor oder hinter der ersten Erhebung 73 liegen. Die Erhebungen 73 sind zur Gewährleistung eines sehr geringen Reibungskoeffizienten vorzugsweise poliert und/oder beschichtet, beispielsweise mit Polytetrafluorethylen.

Die Erhebungen 73 dienen zur Führung der Florbahn 69 im Bereich der unteren Florbahnumlenkwalze 49 im Oberwagen 45 des Vlieslegers, und die Krümmung der Erhebungen 73 entspricht im Wesentlichen der Form eines Umfangsabschnitts der Florbahnumlenkwalze 49. Der Umfangsbereich der Florbahnumlenkwalze 49, der von den Erhebungen 73 umgeben ist, kann vorzugsweise etwas kleiner sein als die Hälfte des Gesamtumfangs der Florbahnumlenkwalze 49 und wird in etwa durch den Bereich definiert, in dem das erste Transportband 51 auf der Florbahnumlenkwalze 49 aufliegt. Somit wird zwischen dem auf der Florbahnumlenkwalze 49 aufliegenden Transportband 51 und den Erhebungen 73 ein Bereich definiert, in dem die vom Transportband 51 mitgeführte Florbahn 69 auf geführte Weise umgedreht wird.

Gleichzeitig gewährleisten die Vertiefungen 75 zwischen den einzelnen Erhebungen 73, dass in jedem Fall vom Transportband 51 mitgeführte Schleppluft, gegebenenfalls zusätzlich auch aus der Florbahn 69 austretende Luft, mitgeführt und schließlich abgeleitet werden kann. Nach Umlauf um die Florbahnumlenkwalze 49 wird die Florbahn 69 anschließend auf dem horizontal laufenden Abschnitt des zweiten Transportbandes 29 abgelegt, von diesem bis zum Legewagen 11 weiterbewegt und dabei durch das erste Transportband 51 von oben abgedeckt.

Es ist außerdem eine Einrichtung 79 vorgesehen, mit der der Abstand zwischen den Erhebungen 73 und dem gegenüberliegenden Abschnitt der Außenfläche des Florbahntransportmittels 51 einstellbar ist. Gemäß Fig. 2 ist die Einrichtung 79 eine Stelleinrichtung, die seitlich neben der unteren Florbahnumlenkwalze 49 im Oberwagen 45 angeordnet ist. Die Einrichtung 79 kann eine Verschiebbarkeit in horizontaler Richtung bewirken, wodurch der Abstand der Erhebungen 73 zum Florbahntransportmittel 51 eingestellt werden kann. Ebenso kann die Einrichtung 79 eine Verschwenkung des Führungselements 71 bewirken. Beispiele möglicher Bewegungen sind in Fig. 2 durch Doppelpfeile angedeutet. Schließlich ist es auch vorteilhaft, wenn die Einrichtung 79 eine größere Verschiebung des Führungselements 71 weg vom Florbahntransportmittel 51 ermöglicht, insbesondere bei Betriebsausfällen oder Notstopps der Anlage z.B. wegen Verstopfung. Grundsätzlich soll der Florführungskanal durch Verstellung des Führungselements 71 alle denkbaren Profilformen annehmen können, d.h. auch Erweiterungen oder Verengungen an gewünschten Stellen.

Im Einlaufbereich des Führungselements 71 ist, wie in Fig. 2 dargestellt, vorzugsweise ein Einlaufführungselement 80 für die Florbahn 69 angeordnet, das einen sich vorzugsweise in Förderrichtung F der Florbahn 69 verjüngenden Floreinlaufkanal definiert. Das Einlaufführungselement 80 kann einstückig mit dem Führungselement 71 ausgebildet sein, an diesem befestigt sein oder als eigenständiges Teil am Maschinenrahmen befestigt sein. Das Einlaufführungselement 80 ist vorzugsweise in Form eines Kamms mit einzelnen Fingern gestaltet, damit die in der Florbahn 69 enthaltene Luft bereits an dieser Stelle zumindest teilweise durch die Zwischenräume zwischen den Fingern entweichen kann und keinen Luftstau im Einlaufbereich verursacht. Ebenso ist im Auslaufbereich des Führungselements 71 die Anordnung eines Auslaufführungselements (nicht dargestellt) denkbar, das vorzugsweise ähnlich gestaltet ist wie das Einlaufführungselement 80, aber einen sich in Förderrichtung F der Florbahn 69 verbreiternden Florauslaufkanal definiert.

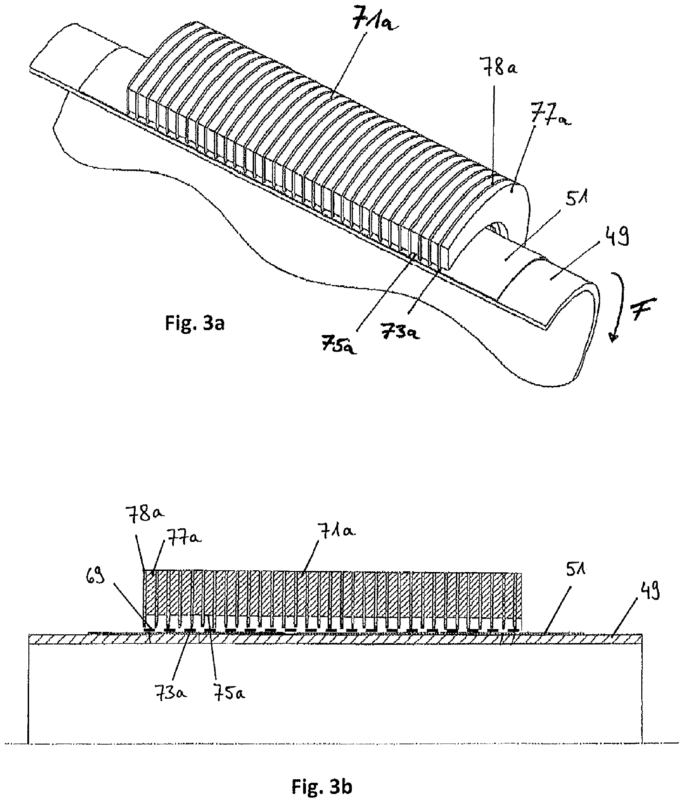

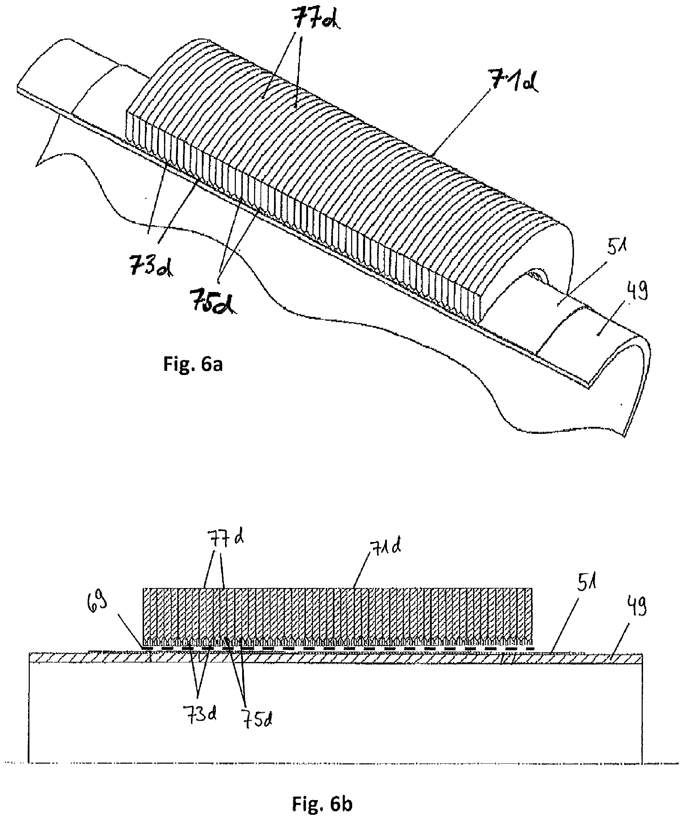

Die Fig. 3a, 3b bis 6a, 6b zeigen je eine perspektivische Ansicht und eine Ansicht im Schnitt von vier Ausführungsformen eines Führungselements 71 der erfindungsgemäßen Vorrichtung. Die oben zur Ausführungsform gemäß Fig. 2 beschriebenen Merkmale, insbesondere die Einrichtung 79 zur Verstellung des Führungselements 71 sowie das Einlaufführungselement 80 und das Auslaufführungselement können auch hier vorhanden sein, obwohl sie nicht dargestellt sind und nicht nochmals beschrieben werden.

Die Fig. 3a, 4a, 5a und 6a zeigen jeweils einen Abschnitt eines als Transportband ausgebildeten Florbahntransportmittels 51, das wie in Fig. 2 um eine Florbahnumlenkwalze 49 geführt ist. Auf dem Transportband 51 ist die Florbahn 69 angeordnet, die in Fig. 3b, 4b, 5b und 6b gestrichelt skizziert ist. Das Transportband 51 wird in Umlaufrichtung bewegt und die Florbahn 69 wird somit durch das Transportband 51 in Förderrichtung F gefördert. Transportband 51 und Florbahn 69 vollziehen im Bereich des in den Fig. 3a, 4a, 5a und 6a gezeigten Abschnitts eine Umlenkung.

Grundsätzlich gilt, dass die Förderrichtung F im Rahmen dieser Erfindung eine variierende Größe ist, da die Florbahn immer einer gekrümmten Bahn folgt. An verschiedenen Stellen der Bahn wird die Förderrichtung F somit jeweils eine andere Ausrichtung zeigen.

Das in den Fig. 3a und 3b gezeigte Führungselement 71a besteht aus einer Mehrzahl von sich in Axialrichtung abwechselnden Plattenelementen, nämlich schmaleren Plattenelementen 78a, die eine größere vertikale Erstreckung haben, und breiteren Plattenelementen 77a, die eine geringere vertikale Erstreckung haben. Die miteinander verbundenen Plattenelemente 77a, 78a bilden hierdurch ein Führungselement 71a mit Erhebungen 73a und Vertiefungen 75a, wobei die schmaleren Plattenelemente 78a die Erhebungen 73a und die breiteren Plattenelemente 77a die Vertiefungen 75a bilden. Entsprechend der Breite der sich abwechselnden Plattenelemente 77a, 78a ergeben sich Erhebungen 73a mit geringerer Breite und Vertiefungen 75a mit größerer Breite.

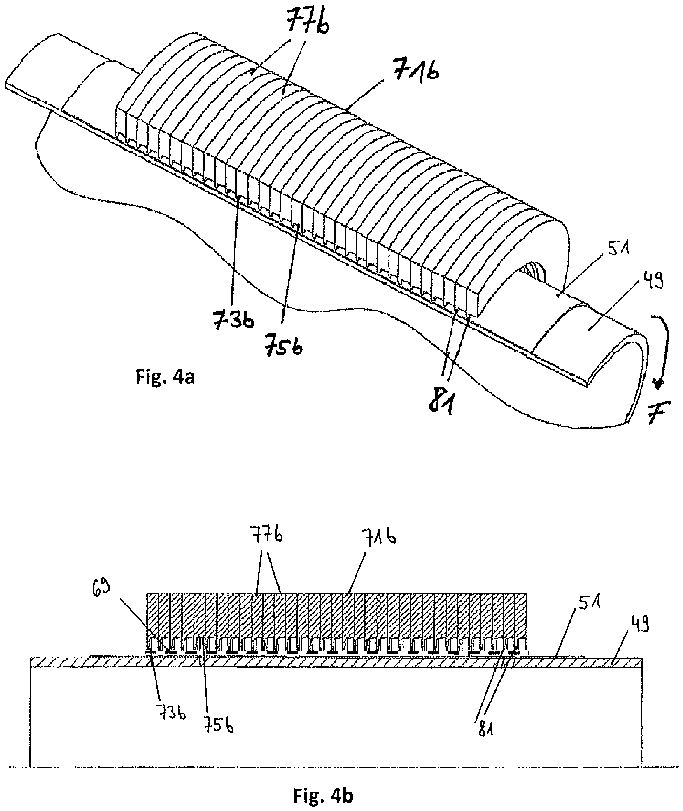

Das in den Fig. 4a und 4b gezeigte Führungselement 71b besteht aus einer Mehrzahl von identischen gekrümmten Plattenelementen 77b. Jedes dieser Plattenelemente 77b weist einen an der linken Seite vorstehenden gekrümmten Vorsprung 81 auf. Im zusammengesetzten Zustand sind die Oberflächenprofile der Führungselemente 71a, 71b der Fig. 3 und 4 in etwa identisch.

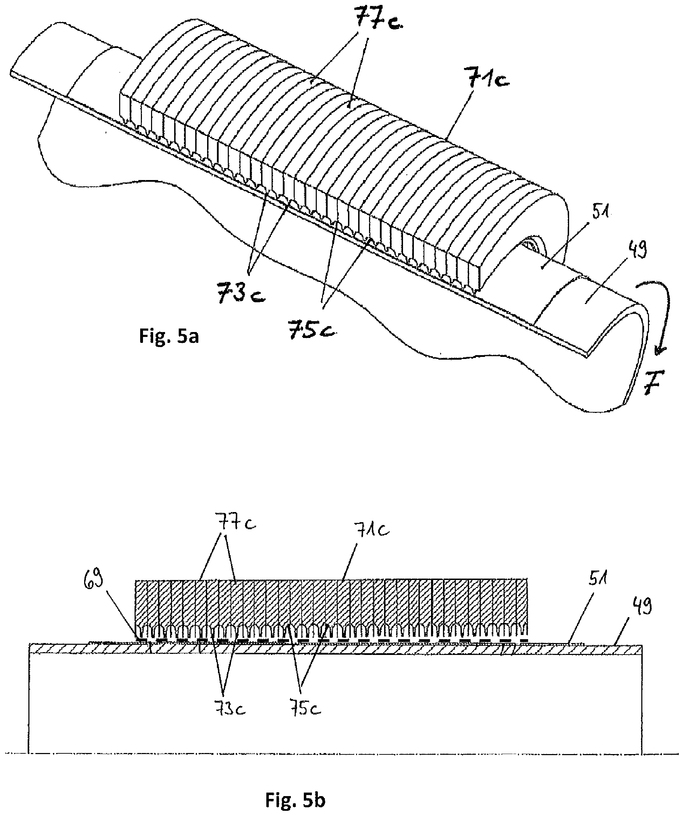

Das in den Fig. 5a und 5b gezeigte Führungselement 71c wird ebenfalls durch eine Mehrzahl von nebeneinander angeordneten Plattenelementen 77c gebildet. Die Plattenelemente 77c weisen an der konkaven Schmalseite mittig gebildete Erhebungen 73c auf, wie am besten in Fig. 5b zu sehen ist. Die Erhebungen 73c haben einen sich in Radialrichtung zu den Führungsflächen hin verjüngenden Querschnitt. Die Vertiefungen 75c zur Bildung der Lüftungsrillen werden, wenn die Plattenelemente 77c nebeneinander angeordnet sind, durch die benachbarten Erhebungen 73c definiert.

In ähnlicher Weise wird das in den Fig. 6a und 6b gezeigte Führungselement 71d auch durch eine Mehrzahl von nebeneinander angeordneten gekrümmten Plattenelementen 77d gebildet. Die Plattenelemente 77d weisen an der konkaven Schmalseite mittig gebildete Erhebungen 73d auf, wie am besten in Fig. 6b zu sehen ist. Die Erhebungen 73d haben einen sich in Radialrichtung zu den Führungsflächen hin verjüngenden Querschnitt. Die Vertiefungen 75d zur Bildung der Lüftungsrillen werden, wenn die Plattenelemente 77d nebeneinander angeordnet sind, durch die benachbarten Erhebungen 73d definiert.

Die Plattenelemente 77d des Führungselements 71d in Fig. 6b sind schmaler als die Plattenelemente 77c des Führungselements 71c in Fig. 5b. Die Vertiefungen 75c des Führungselements 71c in Fig. 5b sind nicht nur breiter, sondern auch tiefer als die Vertiefungen 75d des Führungselements 71d in Fig. 6b.

Bei einer vergleichenden Zusammenschau der Fig. 3 bis 6 ist zu erkennen, dass bei den Führungselementen 71a, 71b in den Fig. 3 und 4 die Erhebungen 73a, 73b senkrecht abragen und die Vertiefungen 75a, 75b ebene Bodenflächen haben, während bei den Führungselementen 71c, 71d in den Fig. 5 und 6 die Erhebungen 73c, 73d bogenförmig oder schräg abragende Flanken aufweisen, wobei die Vertiefungen 75c, 75d bogenförmige oder spitz zulaufende Bodenflächen haben.

Jedes Führungselement 71, 71a-d weist grundsätzlich eine gekrümmte Form auf und ist in Radialrichtung luftundurchlässig. Das Führungselement 71, 71a-d ist mit den Führungsflächen dem Florbahntransportmittel 51 bzw. der darauf transportierten Florbahn 69 zugewandt.

Wie den Fig. 3 bis 6 zu entnehmen ist, wird jedes der Führungselemente 71a-d vorzugsweise aus einer Vielzahl von Plattenelementen 77a-d, 78a gebildet, die miteinander an ihren Seitenflächen verbunden sind, um konkav gekrümmte Führungsflächen zu bilden.

Es ist jedoch klar, dass jedes Führungselement 71, 71a-d auch einstückig ausgebildet sein kann. Es ist z.B. möglich, eine gekrümmte Platte mit Vertiefungen, z.B. Nuten oder Rillen, durch spanabhebende Bearbeitung herzustellen. Ebenso kann das Führungselement 71, 71a-d einstückig gegossen sein. Das Führungselement 71, 71a-d kann aber auch aus einer gekrümmten Grundplatte mit auf der Führungsseite befestigten Stegelementen hergestellt sein. Schließlich können auch mehrere Führungssegmente, die jeweils mehrere Erhebungen 73, 73a-d und Vertiefungen 75, 75a-d aufweisen, axial aneinandergereiht sein und gemeinsam das Führungselement 71, 71a-d bilden.

Die Form der Krümmung der Führungsflächen des Führungselements 71, 71a-d ist beliebig an die Form der von der Florbahn 69 zurückzulegenden Bahn anzupassen. Neben einer Umlenkung der Florbahn 69 um 180° sind auch viele weitere Winkel zwischen Einlaufrichtung und Auslaufrichtung der Florbahn 69 denkbar, auch größere Winkel, insbesondere aber kleinere Winkel.

Die Form des Führungselements 71, 71a-d und sein Abstand vom Florbahntransportmittel 51 sind vorzugsweise abhängig von der jeweils transportierten Florbahn 69 so gewählt, dass ein im Wesentlichen gleichbleibender Abstand zwischen den Erhebungen 73, 73a-d und der Außenfläche des Florbahntransportmittels 51 erzielt wird. Es können aber auch gezielt Verjüngungen oder Verbreiterungen des Florführungskanals zwischen den Erhebungen 73, 73a-d und der Außenfläche des Florbahntransportmittels 51 eingestellt werden.

Vorzugsweise erfolgt die Einstellung des Abstands so, dass die Florbahn 69 an den Führungsflächen des Führungselements 71, 71a-d anliegt und gleichzeitig auch bei hohen Zentrifugalkräften weiterhin ein Kontakt zwischen Florbahn 69 und Außenfläche des Florbahntransportmittels 51 bestehen bleibt. An Stellen des Florführungskanals, die enger sind als die Höhe der Florbahn, kann die Florbahn 69 auch leicht komprimiert werden und somit darin noch enthaltene Luft in die Lüftungsrillen gepresst werden.

Die Erhebungen 73, 73a-d können aber auch in einem Abstand von der Außenfläche des Florbahntransportmittels 51 angeordnet werden, der etwas größer als die Höhe der Florbahn 69 ist. In diesem Fall liegt die Florbahn 69 erst dann an den Führungsflächen des Führungselements 71, 71a-d an, wenn sie aufgrund einer sehr hohen Fördergeschwindigkeit der Florbahn 69 und daraus resultierenden sehr hohen Zentrifugalkraft gleichsam vom Florbahntransportmittel 51 abhebt und vom Luftstrom um die Kurve bewegt wird.

In beiden Fällen erfüllen die Erhebungen 73, 73a-d des Führungselements 71, 71a-d den zusätzlichen positiven Effekt, dass sie im Umlenkbereich durch Formschluss bzw. Reibschluss mit der Florbahn 69 eine ungewünschte Verbreiterung der Florbahn 69 verhindern.

Unter "Florbahn" sind im Rahmen dieser Beschreibung neben Floren auch Faserflockenmatten und Vliese zu verstehen. Die Erfindung kann in allen möglichen Bereichen des Herstellungsprozesses von textilen Flächengebilden zum Transport und der Umlenkung der textilen Flächengebilde verwendet werden.

Das Florbahntransportmittel 51 ist grundsätzlich vorzugsweise ein luftundurchlässiges Transportband, es kann aber auch ein luftdurchlässiges Transportband sein.

## Patentansprüche

1. Vorrichtung zum geführten Transport einer Florbahn (69), mit
einem Florbahntransportmittel (51) mit einer umlaufenden Außenfläche zum Fördern der Florbahn (69) in einer Förderrichtung (F), und
einem Führungselement (71, 71a-d) mit einer gekrümmten Form, das gegenüber einem Abschnitt der Außenfläche des Florbahntransportmittels (51) angeordnet ist und quer zur Förderrichtung (F), der Außenfläche des Florbahntransportmittels (51) zugewandt, ein Oberflächenprofil hat, das eine Mehrzahl von sich abwechselnden Erhebungen (73, 73a-d) und Vertiefungen (75, 75a-d) aufweist,
wobei sich die Mehrzahl von Erhebungen (73, 73a-d) und Vertiefungen (75, 75a-d) in Förderrichtung (F) der Florbahn (69) erstreckt, sodass die Erhebungen (73, 73a-d) Führungsflächen zum Führen der Florbahn (69) und die Vertiefungen (75, 75a-d) Lüftungsrillen zum Ableiten der durch die Florbahn (69) mitgeführten Schleppluft bilden,
**dadurch gekennzeichnet, dass** das Florbahntransportmittel (52) ein um mehrere Umlenkwalzen (47, 49) laufendes Transportband ist, wobei der Abschnitt der Außenfläche des Transportbandes (51), der zum jeweiligen Zeitpunkt dem Führungselement (71, 71a-d) gegenüberliegt, sich immer im Umlaufbereich um eine Florbahnumlenkwalze (49) befindet, und dass das Führungselement (71, 71a-d) in Förderrichtung (F) konkav gekrümmt ist und die Erhebungen (73, 73a-d) radial nach innen weisen.

2. Vorrichtung nach Anspruch 1, **dadurch gekennzeichnet, dass** die Erhebungen (73, 73a-d) in Förderrichtung (F) parallel zueinander verlaufen.

3. Vorrichtung nach Anspruch 1 oder 2, **dadurch gekennzeichnet, dass** die Erhebungen (73, 73a-d) in Richtung quer zur Förderrichtung (F) in gleichen Abständen zueinander angeordnet sind.

4. Vorrichtung nach einem der vorhergehenden Ansprüche, **dadurch gekennzeichnet, dass** sich die Erhebungen (73, 73a-d) und Vertiefungen (75, 75a-d) jeweils über eine konstante Länge erstrecken.

5. Vorrichtung nach einem der vorhergehenden Ansprüche, **dadurch gekennzeichnet, dass** sich die Erhebungen (73, 73a-d) und Vertiefungen (75, 75a-d) über die gesamte Länge des Führungselements (71, 71a-d) in Förderrichtung (F) erstrecken.

6. Vorrichtung nach einem der vorhergehenden Ansprüche, **dadurch gekennzeichnet, dass** die Vertiefungen (75, 75a-d) zumindest abschnittsweise tangential verlaufen.

7. Vorrichtung nach einem der vorhergehenden Ansprüche, **dadurch gekennzeichnet, dass** die durch die Erhebungen (73, 73a-d) gebildeten Führungsflächen und der gegenüberliegende Abschnitt der Außenfläche des Transportbandes (51) im Wesentlichen gleichbleibend voneinander beabstandet sind.

8. Vorrichtung nach einem der vorhergehenden Ansprüche, **dadurch gekennzeichnet, dass** eine Einrichtung (79) vorgesehen ist, mit der der Abstand zwischen den Erhebungen (73, 73a-d) und dem gegenüberliegenden Abschnitt der Außenfläche des Transportbandes (51) einstellbar ist.

9. Vorrichtung nach Anspruch 8, **dadurch gekennzeichnet, dass** das Transportband (51) in einem spitzen Winkel um die Florbahnumlenkwalze (49) geführt ist.

10. Vorrichtung nach einem der vorhergehenden Ansprüche, **dadurch gekennzeichnet, dass** die Erhebungen (73, 73c-d) eine sich in radialer Richtung zu den Führungsflächen hin verjüngende Querschnittsform aufweisen.

11. Vorrichtung nach einem der Ansprüche 1 bis 10, **dadurch gekennzeichnet, dass** die Erhebungen (73, 73a-b) eine Querschnittsform mit gleichbleibender Querschnittsbreite aufweisen.

12. Vorrichtung nach einem der vorhergehenden Ansprüche, **dadurch gekennzeichnet, dass** die Breite der Erhebungen (73, 73a-d) zwischen 0,5 mm und 10 mm, vorzugsweise zwischen 3 mm und 8 mm beträgt.

13. Vorrichtung nach einem der vorhergehenden Ansprüche, **dadurch gekennzeichnet, dass** die Breite der Vertiefungen (75, 75a-d) zwischen 1 mm und 20 mm, vorzugsweise zwischen 4 mm und 12 mm beträgt.

## Claims

1. A device for the guided transport of a fibre web (69), having
a fibre web transport means (51) with a circumferential exterior surface for conveying the fibre web (69) in a conveying direction (F), and
a guide element (71, 71a-d) with a curved form that is arranged opposite a portion of the exterior surface of the fibre web transport means (51) and transversely to the conveying direction (F), facing the exterior surface of the fibre web transport means (51), having a surface profile that comprises a plurality of alternating elevations (73, 73a-d) and depressions (75, 75a-d),
wherein the plurality of elevations (73, 73a-d) and depressions (75, 75a-d) extend in the conveying direction (F) of the fibre web (69), such that the elevations (73, 73a-d) form conveying surfaces for guiding the fibre web (69) and the depressions (75, 75a-d) form vent grooves for extracting the entrained air conveyed along with the fibre web (69), **characterized in that**
the fibre web transport means (52) is a conveyor belt that is deflected around a plurality of deflection rollers (47, 49), wherein the portion of the exterior surface of the conveyor belt (51), that is located opposite the guide element (71, 71a-d) at the respective time, is always located in the circulation area around a fibre web deflection roller (49), and **in that** the guide element (71, 71a-d) is concavely curved in the conveying direction (F) and the elevations (73, 73a-d) point radially inward.

2. The device according to claim 1, **characterized in that** the elevations (73, 73a-d) are parallel to each other in the conveying direction (F).

3. The device according to claims 1 or 2, **characterized in that** the elevations (73, 73a-d) are arranged at equal distances to each other in the direction transverse to the conveying direction (F).

4. The device according to any of the preceding claims, **characterized in that** both the elevations (73, 73a-d) and depressions (75, 75a-d) extend along a non-varying length.

5. The device according to any of the preceding claims, **characterized in that** the elevations (73, 73a-d) and depressions (75, 75a-d) extend along the entire length of the guide element (71, 71a-d) in the conveying direction (F).

6. The device according to any of the preceding claims, **characterized in that** at least certain portions of the depressions (75, 75a-d) extend tangentially.

7. The device according to any of the preceding claims, **characterized in that** the guide surfaces formed by the elevations (73, 73a-d) and the portion of the exterior surface of the conveyor belt (51) facing opposite remain substantially at the same distance from each other.

8. The device according to any of the preceding claims, **characterized in that** an apparatus (79) is provided with which the distance between the elevations (73, 73a-d) and the opposite facing portion of the exterior surface of the conveyor belt (51) can be adjusted.

9. The device according to claim 8, **characterized in that** the conveyor belt (51) is guided at an acute angle around the fibre web deflection roller (49).

10. The device according to any of the preceding claims, **characterized in that** the elevations (73, 73c-d) comprise a cross-sectional shape that tapers down in a radial direction in the direction of the guide surfaces.

11. The device according to any of claims 1 to 10, **characterized in that** the elevations (73, 73a-b) have a cross-sectional shape with a uniform cross-sectional width.

12. The device according to any of the preceding claims, **characterized in that** the width of the elevations (73, 73a-d) is between 0.5 mm and 10 mm, preferably between 3 mm and 8 mm.

13. The device according to any of the preceding claims, **characterized in that** the width of the depressions (75, 75a-d) is between 1 mm and 20 mm, preferably between 4 mm and 12 mm.

## Revendications

1. Dispositif pour le transport guidé d'une bande de voile (69), comprenant
un moyen de transport de bande de voile (51) pourvu d'une surface extérieure périphérique pour l'acheminement de la bande de voile (69) dans une direction d'acheminement (F), et
un élément de guidage (71, 71a-d) présentant une forme courbée, qui est agencé en vis-à-vis d'une section de la surface extérieure du moyen de transport de bande de voile (51) et qui présente, transversalement à la direction d'acheminement (F), tourné vers la surface extérieure du moyen de transport de bande de voile (51), un profilé de surface qui comporte une pluralité de bosses (73, 73a-d) et de creux (75, 75a-d) en alternance,
la pluralité de bosses (73, 73a-d) et de creux (75, 75a-d) s'étendant dans la direction d'acheminement (F) de la bande de voile (69), de sorte que les bosses (73, 73a-d) forment des surface de guidage pour le guidage de la bande de voile (69) et les creux (75, 75a-d) forment des sillons d'aération pour l'évacuation de l'air entraîné par la bande de voile (69),
**caractérisé en ce que**
le moyen de transport de bande de voile (52) est une bande de transport circulant autour de plusieurs cylindres de renvoi (47, 49), la section de la surface extérieure de la bande de transport (51), qui est en vis-à-vis de l'élément de guidage (71, 71a-d) à un moment donné, se situant toujours dans la zone de circulation autour d'un cylindre de renvoi de bande de voile (49), et **en ce que**
l'élément de guidage (71, 71a-d) est courbé de manière concave dans la direction d'acheminement (F) et les bosses (73, 73a-d) sont orientées radialement vers l'intérieur.

2. Dispositif selon la revendication 1, **caractérisé en ce que** les bosses (73, 73a-d) s'étendent parallèlement les unes aux autres dans la direction d'acheminement (F).

3. Dispositif selon la revendication 1 ou 2, **caractérisé en ce que** les bosses (73, 73a-d) sont agencées à intervalles égaux les unes par rapport aux autres dans une direction transversale à la direction d'acheminement (F).

4. Dispositif selon l'une quelconque des revendications précédentes, **caractérisé en ce que** les bosses (73, 73a-d) et les creux (75, 75a-d) s'étendent respectivement sur une longueur constante.

5. Dispositif selon l'une quelconque des revendications précédentes, **caractérisé en ce que** les bosses (73, 73a-d) et les creux (75, 75a-d) s'étendent sur toute la longueur de l'élément de guidage (71, 71ad) dans la direction d'acheminement (F).

6. Dispositif selon l'une quelconque des revendications précédentes, **caractérisé en ce que** les creux (75, 75a-d) s'étendent au moins en partie de manière tangentielle.

7. Dispositif selon l'une quelconque des revendications précédentes, **caractérisé en ce que** les surfaces de guidage formées par les bosses (73, 73a-d) et la section en vis-à-vis de la surface extérieure de la bande de transport (51) sont espacées les unes des autres de manière sensiblement invariable.

8. Dispositif selon l'une quelconque des revendications précédentes, **caractérisé en ce qu'**un système (79) est prévu, au moyen duquel l'écart entre les bosses (73, 73a-d) et la section en vis-à-vis de la surface extérieure de la bande de transport (51) peut être réglé.

9. Dispositif selon la revendication 8, **caractérisé en ce que** la bande de transport (51) est guidée en formant un angle aigu autour du cylindre de renvoi de bande de voile (49).

10. Dispositif selon l'une quelconque des revendications précédentes, **caractérisé en ce que** les bosses (73, 73c-d) présentent une forme de section transversale se rétrécissant dans le sens radial en direction des surfaces de guidage.

11. Dispositif selon l'une quelconque des revendications 1 à 10, **caractérisé en ce que** les bosses (73, 73a-b) présentent une forme de section transversale présentant une largeur en section transversale invariable.

12. Dispositif selon l'une quelconque des revendications précédentes, **caractérisé en ce que** la largeur des bosses (73, 73a-d) est comprise entre 0,5 mm et 10 mm, de préférence entre 3 mm et 8 mm.

13. Dispositif selon l'une quelconque des revendications précédentes, **caractérisé en ce que** la largeur des creux (75, 75a-d) est comprise entre 1 mm et 20 mm, de préférence entre 4 mm et 12 mm.
